# EUROPÄISCHE PATENTSCHRIFT

(11) **EP 1 357 020 B1**
(45) Veröffentlichungstag und Bekanntmachung des Hinweises auf die Patenterteilung: **11.05.2005**
(21) Anmeldenummer: 03003087.8
(22) Anmeldetag: 13.02.2003
(51) Int. Cl.: B62D 27/02, F16B 11/00, C09J 5/02

(54) **Klebeverbindung**
Adhesive joint
Joint adhésif

(30) Priorität: 24.04.2002 DE 20206453 U
(43) Veröffentlichungstag der Anmeldung: 29.10.2003
(73) Patentinhaber: Dr.Ing. h.c.F. Porsche Aktiengesellschaft, 70435 Stuttgart (DE)
(72) Erfinder: Meier, Steffen, 74392 Freudental (DE); Walter, Siegfried, 71229 Leonberg (DE)

(56) Entgegenhaltungen:
- FR-A- 2 714 123
- US-A- 5 358 773
- US-A- 5 776 584
- PATENT ABSTRACTS OF JAPAN vol. 008, no. 061 (M-284), 23. März 1984 (1984-03-23) & JP 58 211973 A (NISSAN JIDOSHA KK), 9. Dezember 1983 (1983-12-09)

## Beschreibung

Die Erfindung bezieht sich auf eine Klebeverbindung zwischen zwei Bauteilen nach dem Oberbegriff des Anspruchs 1.

Aus der DE 197 37 966 A1 ist eine Klebeverbindung zwischen zwei Bauteilen bekannt, wobei das eine Bauteil vorstehende Noppen aufweist, die sich am weiteren Bauteil abstützen. Die Bereiche zwischen den Noppen sind mit einem Kleber ausgefüllt.

US-A-5 358 773 zeigt eine Klebeverbindung mit einer Nut, die einen überflüssigen Klebefluß auffängt.

Der vorliegenden Erfindung liegt das Problem zugrunde, bei einer Klebeverbindung zwischen zwei Bauteilen, die über eine Gewinde/Bolzenverbindung miteinander verbunden werden, einen begrenzten Klebefluß zu gewährleisten.

Dieses Problem wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß ein Klebeauftrag bzw. ein Klebefluß auf einem Bauteil, das eine oder mehrere Verbindungshülsen mit einem Innengewinde aufweist, durch eine um das Gewinde rundherum verlaufende nutförmige Vertiefung verhindert wird. Hierzu ist im Kopf der angeformten Verbindungshülsen des ersten Bauteils die nutförmige Vertiefung angeordnet. Diese Vertiefung ist beabstandet zum Innengewinde der Hülse verlaufend und vom zweiten Bauteil abgedeckt und fängt den Klebefluß auf, indem in der Vertiefung der Kleber angesammelt wird, so daß kein Kleber das Innengewinde verschmutzt und dieses unbrauchbar macht. Insbesondere ist die Vertiefung geringfügig beabstandet zum Innengewinde vorgesehen, das heißt, es verbleibt eine zwischen der Vertiefung und dem Innengewinde der Verbindungshülse vorgesehene Ringfläche, die frei von Kleber gehalten wird.

Die mit dem Innengewinde versehene Hülse ist in einem Halter vorgesehen, der mit einem Bodenteil verklebbar ist und mit dem Halter über Schrauben ein Verzurrelement in einem Laderaumboden befestigt wird.

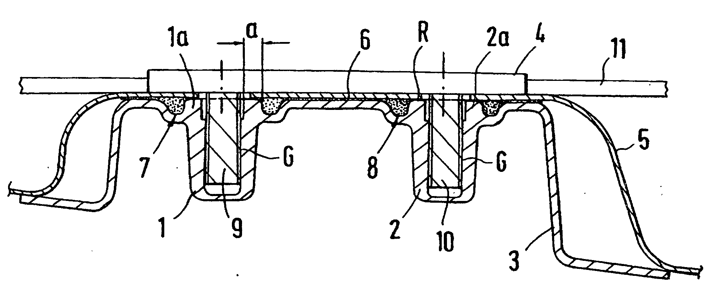

Ein Ausführungsbeispiel der Erfindung ist in den Zeichnungen dargestellt und wird im folgenden näher beschrieben, wobei die Zeichnung einen Schnitt durch das Bauteil mit den nutförmigen Vertiefungen sowie einem abdeckenden Bodenteil aufweist.

Zwischen einem zwei Verbindungshülsen 1 und 2 aufweisenden Halter 3 für ein Verzurrelement 4 und einem Bodenteil 5 ist ein Kleber 6 vorgesehen. Dieser erstreckt sich bis zu den nutförmigen Vertiefungen 7, 8, welche die Verbindungshülsen 1, 2 am oberen freien Kopfende 1a, 2a ringförmig umschließen.

Diese Verbindungshülsen 1, 2 sind mit einem Innengewinde G versehen, in das Bolzen 9, 10 des Verzurrelements 4 einschraubbar sind, das in einem Ladeboden 11 angeordnet wird.

Die nutförmigen Vertiefungen 7,8 sind vorzugsweise mit einem Abstand a zum Innengewinde G der Hülsen 1,2 angeordnet, damit keine Verschmutzung des Gewindes G mit Kleber 6 erfolgen kann. Beim Auftrag mit dem Kleber 6 sammelt sich dieser in den nutförmigen Vertiefungen 7, 8 und kann somit nicht in das Innengewinde G fließen.

Nach einer weiteren Ausführung kann in die nutförmigen Vertiefungen 7, 8 auch ein sogenannter Klebering eingesetzt werden, der durch Erwärmung expandiert und abdichtet. Die Verbindung des Halters 3 mit dem Bodenteil 5 kann entweder über den Kleber 6 oder über eine Punktschweißung erfolgen. Der Klebering ist vor der Erhitzung kleiner als die nutförmige Vertiefung ausgeführt und kann sich soweit ausdehnen, daß eine Abdichtung zum Bodenblech 5 erfolgt. Bei einem Klebeauftrag kann somit noch Kleber 6 von der nutförmigen Vertiefung 7, 8 aufgenommen werden. Auch kann der Klebering größer ausgeführt sein als die nutförmige Vertiefung.

## Patentansprüche

1. Klebeverbindung zwischen zwei Bauteilen (3,5), wobei ein erstes Bauteil (3) angeformte Hülsen (1,2) mit einem Innengewinde (G) aufweist und das zweite Bauteil (5) darüber setzbar und mit dem ersten Bauteil verklebbar ist, wobei im Kopf (1a, 2a) der angeformten Verbindungshülsen (1, 2) des ersten Bauteils (3) eine rundherum verlaufende nutförmige Vertiefung (7, 8) angeordnet ist, die beabstandet mit einem Maß (a) zum Innengewinde (G) der Verbindungshülsen (1, 2) verläuft und vom zweiten Bauteil (5) abgedeckt ist.

2. Klebeverbindung nach Anspruch 1, **dadurch gekennzeichnet, daß** sich ein Kleber (6) auf dem ersten Bauteil (3) bis zu den Vertiefungen (7, 8) erstreckt und in diesen der Kleber (6) geseammelt angeordnet ist.

3. Klebeverbindung nach den Ansprüchen 1 oder 2, **dadurch gekennzeichnet, daß** eine zwischen den Vertiefungen (7, 8) und dem Innengewinde (G) der Verbindungshülsen (1, 2) verbleibende Ringfläche (R) frei vom Kleber (6) ist.

4. Klebeverbindung nach Anspruch 1, **dadurch gekennzeichnet, daß** das erste Bauteil (3) aus einem Halter mit den zwei angeformten Verbindungshülsen (1, 2) mit jeweiligem Innengewinde (G) besteht, der mit einem Bodenteil (5) verbindbar ist und mit dem Halter (3) über Schrauben (9, 10) ein Verzurrelement (4) in einem Laderaumboden (11) verbindbar ist.

5. Klebeverbindung nach Anspruch 1, **dadurch gekennzeichnet, daß** in den Vertiefungen (7, 8) des ersten Bauteils (3) ein bei Erhitzung expandierender Klebering angeordnet ist und das zweite Bauteil (5) geklebt oder punktgeschweißt mit dem ersten Bauteil (3) verbindbar ist.

## Claims

1. An adhesive join between two components (3, 5), wherein a first component (3) has integrally formed sleeves (1, 2) with an internal thread (G) and the second component (5) can be placed above it and can be secured to the first component by adhesion, wherein a groove-shaped depression (7, 8), which extends all round and which extends at a distance by an amount (a) from the internal thread (G) of the integrally formed connecting sleeves (1, 2) of the first component (3) and is covered by the second component (5), is arranged in the head (1a, 2a) of the connecting sleeves (1, 2).

2. An adhesive join according to Claim 1, **characterized in that** an adhesive (6) extends on the first component (3) as far as the depressions (7, 8) and the adhesive (6) collects in the said depressions (7, 8).

3. An adhesive join according to Claims 1 or 2, **characterized in that** an annular area (R) remaining between the depressions (7, 8) and the internal thread (G) of the connecting sleeves (1, 2) is free of the adhesive (6).

4. An adhesive join according to Claim 1, **characterized in that** the first component (3) comprises a holding means with the two integrally formed connecting sleeves (1, 2) with a respective internal thread (G), which holding means can be connected to a base part (5), and a clamping element (4) in a load floor (11) can be connected to the holding means (3) by way of screws (9, 10).

5. An adhesive join according to Claim 1, **characterized in that** a ring of adhesive which expands when heated is arranged in the depressions (7, 8) of the first component (3) and the second component (5) can be joined to the first component (3) by being secured by adhesion or being spot-welded.

## Revendications

1. Liaison collée entre deux composants (3, 5), un premier composant (3) comportant des douilles (1, 2) formées sur celui-ci avec un taraudage (G), et le deuxième composant (5) pouvant être placé sur le premier composant et collé avec celui-ci, dans la tête (1a, 2a) des douilles de liaison (1, 2) formées sur le premier composant (3), étant pratiqué un renfoncement (7, 8) en forme de rainure s'étendant tout autour et à distance, d'une cote (a), du taraudage (G) des douilles de liaison (1, 2), et qui est recouvert par le deuxième composant (5).

2. Liaison collée selon la revendication 1, **caractérisée en ce qu'**une colle (6) s'étend sur le premier composant (3) jusqu'aux renfoncements (7, 8) et est accumulée dans ceux-ci.

3. Liaison collée selon les revendications 1 ou 2, **caractérisée en ce qu'**une surface annulaire (R), restant entre les renfoncements (7, 8) et le taraudage (G) des douilles de liaison (1, 2), est exempte de colle (6).

4. Liaison collée selon la revendication 1, **caractérisée en ce que** le premier composant (3) est constitué d'un support avec les deux douilles de liaison (1, 2) formées sur le composant avec taraudage (G) respectif, qui peut être relié à un fond (5), et un élément d'attache (4) peut être relié par des vis (9, 10) au support (3), dans un fond de compartiment de chargement (11).

5. Liaison collée selon la revendication 1, **caractérisée en ce que** dans les renfoncements (7, 8) du premier composant (3) est disposé un anneau de colle s'expansant à la chaleur, et le deuxième composant (5) est collé ou peut être relié par soudure par points au premier composant (3).
